# EUROPEAN PATENT APPLICATION

(11) **EP 4 206 279 A1**
(43) Date of publication of application: **05.07.2023**
(21) Application number: 21859950.4
(22) Date of filing: 14.07.2021
(51) Int. Cl.: C08L 27/18, C08F 214/26

(54) **MODIFIED PERFLUOROETHER FLUORORUBBER, PREPARATION METHOD THEREFOR, AND APPLICATION THEREOF**

(30) Priority: 28.08.2020 CN 202010882711
(71) Applicant: Zhonghao Chenguang Research Institute of Chemical Industry Co., Ltd., Zigong, Sichuan 643201 (CN)
(72) Inventor: YU, Jinlong, Zigong City, Sichuan 643201 (CN); LIU, Bo, Zigong City, Sichuan 643201 (CN); ZHONG, Ziqiang, Zigong City, Sichuan 643201 (CN); ZHANG, Tingjian, Zigong City, Sichuan 643201 (CN); XIAO, Zhongliang, Zigong City, Sichuan 643201 (CN)
(74) Representative: Kailuweit & Uhlemann Patentanwälte Partnerschaft mbB
(86) International application number: PCT/CN2021/106246
(87) International publication number: WO 2022/042110

(57) **Abstract**

The present invention provides modified perfluoroether fluororubber, a preparation method therefor, and an application thereof. The modified perfluoroether fluororubber comprises raw materials of perfluoroether fluororubber and polytetrafluoroethylene materials, wherein the mass ratio of perfluoroether fluororubber to polytetrafluoroethylene is (70-95): (5-30). The modified perfluoroether fluororubber provided by the present invention can resist a high temperature of 300°C and can still meet use requirements at 300°C; moreover, the hardness and the pressure change of the modified perfluoroether fluororubber are lower, and the medium resistance and the processability are good.

## Description

### Technical field

The present invention belongs to the technical field of rubber materials, and relates to a modified perfluoroether fluororubber and preparation method therefor and use thereof, in particular relates to a high temperature resistant modified perfluoroether fluororubber and preparation method therefor and use thereof.

### Background

Fluororubber refers to a synthetic polymer elastomer containing fluorine atoms on the carbon atoms of the main or side chain. The introduction of fluorine atoms gives rubber excellent heat resistance, oxidation resistance, oil resistance, corrosion resistance and atmospheric aging resistance. Such rubbers are widely used in aerospace, aviation, automobiles, petroleum and household appliances and other fields, and are an irreplaceable key material in the cutting-edge industry of national defense. Among various fluororubbers, tetrafluoroethylene (TFE) and perfluoroalkyl vinyl ether (PAVE) copolymer (PFA, also known as perfluoroether fluororubber) has excellent characteristics such as heat resistance, chemical resistance and purity, so it is used for fusion molding of various liquid chemical transfer pipes, piping joints, handling containers, storage containers, pumps, filter housings, etc. or for gasket of steel piping, valves, joints, etc. in chemical equipment and semiconductor or liquid crystal manufacturing processes. At present, fluororubbers have been industrialized in foreign companies such as DuPont, Daikin, Solvay, and 3M.

CN110713564A discloses a synthesis method for wide-temperature range perfluoroether rubber and the perfluoroether rubber thereof, which uses tetrafluoroethylene and perfluoromethoxyethyl vinyl ether as comonomers to prepare perfluoroether rubber by emulsion polymerization, and adds one or more of the vulcanization point monomer perfluoro-4-bromo-1-butene, perfluorobromoethyl vinyl ether, perfluoroiodoethyl vinyl ether, perfluoro-4-iodo-1-butene, trifluoroiodoethylene or trifluorobromoethylene in the process of polymerization. I(CF₂)ₙI is selected as the chain transfer agent. The perfluoroether rubber obtained by the patent application can only be used in a high temperature environment below 250 °C, which cannot meet the requirements of higher operating temperature.

CN105820480A discloses a high temperature resistant fluororubber and preparation method thereof, comprising components with the following mass percentages: 55-80% of fluororubber 2604, 1.0-3.0% of active magnesium oxide, 0.05-0.5% of bisphenol AF, 0.5-2.0% of tert-butyl peroxy pivalate, 0.1-1.0% of carnauba wax, 0.2-1.0% of WS280, 1.0-10.0% of the light stabilizer TBS (p-tert-butyl phenyl salicylate), 15.0-30.0% of carbon black N990, and 0.5-3.5% of calcium hydroxide; the preparation method of the high temperature resistant fluororubber comprises the following steps: firstly weighing each component; mixing; then refining the thin pass for 5-10 times, 2-3 of triangle bags; finally releasing the sheets. The patent application can make the rubber have certain high temperature resistance by adding various additives to the fluororubber, but it still only reaches a high temperature resistance of 250 °C, which cannot meet the requirements of higher operating temperature.

Therefore, it is necessary to provide a rubber material that can withstand higher temperatures to meet the application requirements.

### Summary

The object of the present invention is to provide a modified perfluoroether fluororubber and preparation method therefor and use thereof, the modified perfluoroether fluororubber provided according to the present invention can withstand a high temperature of 300 °C, and can still meet the requirements of use at 300 °C; at the same time, its hardness and compression deformation are lower, and its medium resistance and processability are good.

In order to achieve this object, the technical solutions adopted in the present invention are as follows.

In the first aspect, the present invention provides a modified perfluoroether fluororubber, wherein the constituent raw materials of the modified perfluoroether fluororubber comprise a perfluoroether fluororubber and a polytetrafluoroethylene material (PTFE);
wherein, the mass ratio of the perfluoroether fluororubber and the polytetrafluoroethylene is (70-95):(5-30).

In the modified perfluoroether fluororubber provided according to the present invention, the polytetrafluoroethylene molecular chain is distributed uniformly between the perfluoroether fluororubber molecular chains, so that the final obtained rubber has excellent high temperature resistance.

In the present invention, if the addition amount of perfluoroether fluororubber is too high and the addition amount of polytetrafluoroethylene is too low, the high temperature resistance of the material decreases; if the addition amount of perfluoroether fluororubber is too low and the addition amount of polytetrafluoroethylene is too high, the material cannot be processed.

In the present invention, the range 70-95 may be 72, 75, 78, 80, 82, 85, 88, 90, 92, etc., and the range 5-30 may be 8, 10, 12, 15, 18, 20, 22, 25, 28, etc.

As a preferred technical solution of the present invention, based on 100 wt% of the mass of the modified perfluoroether fluororubber, the content of the perfluoroether fluororubber is 70-95 wt%, such as 72 wt%, 75 wt%, 78 wt%, 80 wt%, 82 wt%, 85 wt%, 88 wt%, 90 wt%, 92 wt%, etc., and the content of the polytetrafluoroethylene is 5-30 wt%, such as 8 wt%, 10 wt%, 12 wt%, 15 wt%, 18 wt%, 20 wt%, 22 wt%, 25 wt%, 28 wt%, etc.

In the present invention, the preparation method of the perfluoroether fluororubber comprises: emulsion polymerization of tetrafluoroethylene and a perfluoroalkyl vinyl ether to provide an emulsion containing the perfluoroether fluororubber;
preferably, the molar ratio of tetrafluoroethylene and the perfluoroalkyl vinyl ether is (55-75):(25-35).

In the present invention, the obtained perfluoroether fluororubber has excellent high temperature resistance as a result of a specific molar ratio of tetrafluoroethylene and perfluoroalkyl vinyl ether; if the addition amount of perfluoroalkyl vinyl ether is too low, the hardness index of perfluoroether fluororubber is higher and the processability is poor; if the addition amount of perfluoroalkyl vinyl ether is too high, the rigidity of perfluoroether fluororubber is reduced, the high temperature resistance is reduced, and the medium resistance is reduced.

In the present invention, the range 55-75 may be 58, 60, 62, 65, 68, 70, 72, etc., and the range 25-35 may be 26, 28, 30, 31, 32, 34, etc.

The perfluoroalkyl vinyl ether according to the present application is selected from any one or a combination of at least two of perfluoromethyl vinyl ether, perfluoroethyl vinyl ether or perfluoropropyl vinyl ether.

The reaction system of the emulsion polymerization according to the present application further comprises a vulcanization point monomer, preferably the vulcanization point monomer is a perfluoroiodoolefin, and further preferably I(CF₂)₂OCF=CF₂.

The preferred vulcanization point monomer according to the present application may be cross-linked and vulcanized by a peroxide vulcanization system, and at the same time, the iodine atom is very easy to de-radicalize under the action of free radicals, which is conducive to the vulcanization of peroxides; moreover, it is a vulcanization point monomer of a iodine-containing perfluoroether, which is conducive to improving the processability of perfluoroether fluororubber to a certain extent.

The temperature of the emulsion polymerization according to the present invention is 60-95°C, such as 65°C, 70°C, 75°C, 80°C, 85°C, 90°C, etc.

The pressure of the emulsion polymerization according to the present invention is 2.8~3.5 MPa, such as 2.9 MPa, 3.0 MPa, 3.1 MPa, 3.2 MPa, 3.3 MPa, 3.4 MPa, etc.

The reaction system of emulsion polymerization according to the present invention further comprises an initiator, preferably the initiator is ammonium persulfate and/or potassium persulfate, preferably based on 100 parts by weight of aqueous medium, the amount of the initiator is 0.1-8 parts by weight, such as 1 part by weight, 2 parts by weight, 3 parts by weight, 4 parts by weight, 5 parts by weight, 6 parts by weight, 7 parts by weight, etc.

The reaction system of the emulsion polymerization according to the present invention further comprises a perfluorooctanoate as an emulsifier, preferably based on 100 parts by weight of aqueous medium, the amount of the emulsifier is 0.01-5 parts by weight, such as 1 part by weight, 2 parts by weight, 3 parts by weight, 4 parts by weight, etc.

The reaction system of the emulsion polymerization according to the present invention further comprises a chain transfer agent, preferably, the chain transfer agent is selected from any one or a combination of at least two of 1,2-diiodoperfluoroethane, 1,3-diiodoperfluoropropane or 1,4-diiodoperfluorobutane, preferably based on the total mass of the tetrafluoroethylene and the perfluoroalkyl vinyl ether, the amount of the chain transfer agent is 0.01-5%, such as 0.1%, 0.5%, 1%, 2%, 3%, 4%, etc.

In the second aspect, the present invention provides a preparation method for the modified perfluoroether fluororubber described in the first aspect, the preparation method comprises the following steps:
mixing a perfluoroether fluororubber emulsion and a polytetrafluoroethylene emulsion to provide an emulsion containing a mixture of the raw materials.

As a preferred technical solution of the present invention, the temperature of the mixing is 60-95°C, such as 65°C, 70°C, 75°C, 80°C, 85°C, 90°C, etc.

The time of the mixing is 30-60 min, such as 35 min, 40 min, 45 min, 50 min, 55 min, etc.

The rotate speed of the mixing is 200-600 r/min, such as 300 r/min, 400 r/min, 500 r/min, etc.

As a preferred technical solution of the present invention, the method further comprises agglomerating, washing and drying of the emulsion containing a mixture of the raw materials.

The agglomerating, washing and drying of the emulsion according to the present invention are conventional processes in the art, and will not be repeated herein.

In the third aspect, the present invention provides the use of the modified perfluoroether fluororubber of the first aspect in a sealing material, preferably in a sealing material resistant to 300°C.

Compared with the prior art, the present invention has the following beneficial effects:
The obtained modified perfluoroether fluororubber according to the present invention can withstand a high temperature of 300°C as a result of a specific perfluoroether fluororubber and a specific mass ratio of the perfluoroether fluororubber and polytetrafluoroethylene. After being placed at 310°C for 70 h, it still has excellent tensile strength and elongation at break, while its hardness and compression deformation are relatively low, and the medium resistance and processability are good.

### Best mode

The technical solutions of the present invention are further explained by the following specific embodiments. Those skilled in the art should understand that the embodiments are only to help understand the present invention and should not be regarded as a specific limitation of the present invention.

### Preparation Example 1

A perfluoroether fluororubber emulsion, wherein the preparation method was as follows:
(1) adding 30 L of deionized water to a 50 L reactor, vacuumizing the reactor to an oxygen content of ≤ 30 ppm, adding 35 g of ammonium perfluorooctanoate, and heating to 85°C; and
(2) feeding tetrafluoroethylene and perfluoromethyl vinyl ether with a molar ratio of 75:25, raising the reactor pressure to 3.0 MPa, adding 15 g of potassium persulfate, 25 g of 1,2-diiodoperfluoroethane and 60 g of I(CF₂)₂OCF = CF₂ to carry out the polymerization reaction, and when the addition amount of the reaction monomers being 10 kg, ending the reaction, recovering the unreacted monomers and a perfluoroether fluororubber emulsion being obtained.

### Preparation Example 2

A perfluoroether fluororubber emulsion, wherein the preparation method was as follows:
(1) adding 30 L of deionized water to a 50 L reactor, vacuumizing the reactor to an oxygen content of ≤ 30 ppm, adding 50 g of ammonium perfluorooctanoate, and heating to 65°C; and
(2) feeding tetrafluoroethylene and perfluoromethyl vinyl ether with a molar ratio of 55:35, raising the reactor pressure to 3.5 MPa, adding 30 g of potassium persulfate, 50 g of 1,2-diiodoperfluoroethane and 60 g of I(CF₂)₂OCF = CF₂ to carry out the polymerization reaction, and when the addition amount of the reaction monomers being 10 kg, ending the reaction, recovering the unreacted monomers and a perfluoroether fluororubber emulsion being obtained.

### Preparation Example 3

A perfluoroether fluororubber emulsion, wherein the preparation method was as follows:
(1) adding 30 L of deionized water to a 50 L reactor, vacuumizing the reactor to an oxygen content of ≤ 30 ppm, adding 100 g of ammonium perfluorooctanoate, and heating to 90°C; and
(2) feeding tetrafluoroethylene and perfluoromethyl vinyl ether with a molar ratio of 65:35, raising the reactor pressure to 2.8 MPa, adding 30 g of potassium persulfate, 10 g of 1,2-diiodoperfluoroethane and 60 g of I(CF₂)₂OCF = CF₂ to carry out the polymerization reaction, and when the addition amount of the reaction monomers being 10 kg, ending the reaction, recovering the unreacted monomers and a perfluoroether fluororubber emulsion being obtained.

### Comparative Preparation Examples 1-2

Compared with Preparation Example 1, the differences of the Comparative Preparation Examples lie in that, the molar ratio of tetrafluoroethylene and perfluoromethyl vinyl ether was 80:20 (Comparative Preparation Example 1) and 50:40 (Comparative Preparation Example 2), respectively.

### Example 1

A modified perfluoroether fluororubber, wherein the preparation method was as follows:
mixing the perfluoroether fluororubber emulsion prepared in Preparation Example 1 with a PTFE emulsion with a solid content of 25%, controlling the temperature of the emulsion to be at 70 °C, mixing at a rotate speed of 320 r/min for 45 min, then agglomerating, washing, and drying at about 100 °C under vacuum to provide about 10.8 kg of the modified perfluoroether fluororubber.

Wherein, the mass ratio of perfluoroether fluororubber and PTFE was 85:15.

### Examples 2-3

Compared with Example 1, the differences of Examples 2-3 lie in that, the perfluoroether fluororubber provided in Preparation Example 1 was replaced by the perfluoroether fluororubber provided in Preparation Examples 2-3, respectively.

### Example 4

A modified perfluoroether fluororubber, wherein the preparation method was as follows:
mixing the perfluoroether fluororubber emulsion prepared in Preparation Example 1 with a PTFE emulsion with a solid content of 25%, controlling the temperature of the emulsion to beat 60 °C, mixing at a rotate speed of 600 r/min for 60 min, then agglomerating, washing, and drying at about 100 °C under vacuum to provide the modified perfluoroether fluororubber.

Wherein, the mass ratio of perfluoroether fluororubber and PTFE was 80:20.

### Example 5

A modified perfluoroether fluororubber, wherein the preparation method was as follows:
mixing the perfluoroether fluororubber emulsion prepared in Preparation Example 1 with a PTFE emulsion with a solid content of 25%, controlling the temperature of the emulsion to be at 95 °C, mixing at a rotate speed of 200 r/min for 30 min, then agglomerating, washing, and drying at about 100 °C under vacuum to provide the modified perfluoroether fluororubber.

Wherein, the mass ratio of perfluoroether fluororubber and PTFE was 90:10.

### Comparative Examples 1-2

Compared with Example 1, the differences of Comparative Examples 1-2 lie in that, the perfluoroether fluororubber provided in Preparation Example 1 was replaced by the perfluoroether fluororubber provided in Comparative Preparation Examples 1-2, respectively.

### Comparative Examples 3-4

Compared with Example 1, the differences of Comparative Examples 3-4 lie in that, the mass ratio of perfluoroether fluororubber and PTFE was 60:40 (Comparative Example 3) and 99:1 (Comparative Example 4), respectively.

### Performance test

The raw rubbers (perfluoroether fluororubber product) prepared by Examples 1-5 and Comparative Examples 1-4 were vulcanized, and the vulcanization formula is shown in Table 1:

**Table 1**

| Component or procedure | Parameter |
|---|---|
| Raw rubber | 100 parts |
| 2,5-dimethyl-2,5-di(tert-butylperoxy)hexane, 75% | 4 parts |
| TAIC | 3 parts |
| N990 | 20 parts |
| First-stage vulcanization | 170°C×10min |
| Second-stage vulcanization | 232°C×4h |

The performance test of raw rubbers and vulcanized samples was conducted to measure the Mooney viscosity, fluorine content, mechanical properties (tensile strength and elongation at break), hardness and compression deformation. The test results are shown in Table 2:

**Table 2**

| Sample | Mooney viscosity | F content /% | Mechanical properties (room temperature) | | Mechanical properties (310°C×70 h) | | Hardness /Ha | Compression deformation /% |
|---|---|---|---|---|---|---|---|---|
| | | | Tensile strength /MPa | Elongation at break /% | Tensile strength /MPa | Elongation at break /% | | |
| Example 1 | 62 | 72.2 | 28.7 | 180 | 26.2 | 175 | 74 | 25 |
| Example 2 | 58 | 72.1 | 29.3 | 180 | 26.9 | 170 | 75 | 28 |
| Example 3 | 55 | 72.0 | 28.4 | 190 | 26.0 | 170 | 75 | 26 |
| Example 4 | 63 | 72.1 | 29.6 | 185 | 27.1 | 170 | 75 | 25 |
| Example 5 | 54 | 72.2 | 28.7 | 170 | 26.8 | 160 | 76 | 29 |
| Comparative Example 1 | 77 | 72.0 | 29.5 | 110 | 22.3 | 60 | 85 | 45 |
| Comparative Example 2 | 78 | 72.1 | 28.9 | 130 | 20.1 | 80 | 86 | 43 |
| Comparative Example 3 | 65 | 72.1 | 28.6 | 175 | 15.2 | 40 | 74 | 24 |
| Comparative Example 4 | 25 | 69.0 | 12.3 | 210 | 5.6 | 30 | 72 | 43 |

It can be seen from the Examples and performance test that the modified perfluoroether fluororubber provided according to the present invention can withstand a high temperature of 300°C, and still has excellent tensile strength and elongation at break after being placed at 310°C for 70 h, while the hardness and compression deformation are low, and the medium resistance and processability are good.

From the comparison of Example 1 and Comparative Examples 1-2, it can be seen that in the preparation of perfluoroether fluororubber, the molar ratio of tetrafluoroethylene and perfluoroalkyl vinyl ether being (55-75):(25-35) can give the perfluoroether fluororubber better comprehensive performance. From the comparison of Example 1 and Comparative Examples 3-4, it can be seen that in the preparation material of modified perfluoroether fluororubber, the mass ratio of perfluoroether fluororubber and polytetrafluoroethylene being (70-95):(5-30) can give the modified perfluoroether fluororubber more excellent performance.

The applicant declares that the present invention illustrates the modified perfluoroether fluororubber, the preparation method therefor and use thereof according to the present invention by the above embodiments, but the present invention is not limited to the above detailed methods, that is, it does not mean that the present invention must rely on the above detailed methods to be implemented. Those skilled in the art should understand that any modification of the present invention, equivalent substitution of each and any raw material of the product of the present invention, addition of auxiliary ingredient, selection of a specific method, etc., all fall within the scope of protection and disclosure of the present invention.

## Claims

1. A modified perfluoroether fluororubber, wherein the constituent raw materials of the modified perfluoroether fluororubber comprise a perfluoroether fluororubber and a polytetrafluoroethylene material;
wherein, the mass ratio of the perfluoroether fluororubber and the polytetrafluoroethylene is (70-95):(5-30).

2. The modified perfluoroether fluororubber according to claim 1, wherein based on 100 wt% of the mass of the modified perfluoroether fluororubber, the content of the perfluoroether fluororubber is 70-95 wt%, and the content of the polytetrafluoroethylene is 5-30 wt%.

3. The modified perfluoroether fluororubber according to claim 1, wherein the perfluoroether fluororubber is prepared through a method comprising: emulsion polymerization of tetrafluoroethylene and a perfluoroalkyl vinyl ether to provide an emulsion containing the perfluoroether fluororubber;
preferably, the molar ratio of tetrafluoroethylene and the perfluoroalkyl vinyl ether is (55-75):(25-35).

4. The modified perfluoroether fluororubber according to claim 3, wherein the perfluoroalkyl vinyl ether is selected from any one or a combination of at least two of perfluoromethyl vinyl ether, perfluoroethyl vinyl ether or perfluoropropyl vinyl ether; and/or
the reaction system of the emulsion polymerization further comprises a vulcanization point monomer, preferably the vulcanization point monomer is perfluoroiodoolefin, and further preferably I(CF₂)₂OCF=CF₂.

5. The modified perfluoroether fluororubber according to claim 3, wherein the temperature of the emulsion polymerization is 60-95°C; and/or
the pressure of the emulsion polymerization is 2.8~3.5 MPa.

6. The modified perfluoroether fluororubber according to claim 3, wherein the medium of the emulsion polymerization is water; and/or
the reaction system of the emulsion polymerization further comprises an initiator, preferably the initiator is ammonium persulfate and/or potassium persulfate, preferably, based on 100 parts by weight of aqueous medium, the amount of the initiator is 0.1-8 parts by weight; and/or
the reaction system for emulsion polymerization further comprises a perfluorooctanoate as an emulsifier, preferably, based on 100 parts by weight of aqueous medium, the amount of the emulsifier is 0.01-5 parts by weight; and/or
the reaction system for emulsion polymerization further comprises a chain transfer agent, preferably, the chain transfer agent is selected from any one or a combination of at least two of 1,2-diiodoperfluoroethane, 1,3-diiodoperfluoropropane or 1,4-diiodoperfluorobutane, preferably based on the total mass of the tetrafluoroethylene and the perfluoroalkyl vinyl ether, the amount of the chain transfer agent is 0.01-5%.

7. A preparation method of the modified perfluoroether fluororubber according to any one of claims 1-6, wherein the preparation method comprises the following steps:
mixing a perfluoroether fluororubber emulsion and a polytetrafluoroethylene emulsion to provide an emulsion containing a mixture of the raw materials.

8. The preparation method according to claim 7, wherein the temperature of the mixing is 60-95°C ; and/or
the time of the mixing is 30-60 min; and/or
the rotate speed of the mixing is 200-600 r/min.

9. The preparation method according to claim 7, further comprising agglomerating, washing and drying of the emulsion containing a mixture of the raw materials to provide the modified perfluoroether fluororubber.

10. Use of the modified perfluoroether fluororubber according to any one of claims 1-6 in a sealing material, preferably in a sealing material resistant to 300°C.
